(19) Europäisches Patentamt
European Patent Office
Office européen des brevets

(11) Publication number: **0 331 306 A1**

(12) # EUROPEAN PATENT APPLICATION

(21) Application number: **89301410.0**

(22) Date of filing: **15.02.89**

(51) Int. Cl.4: **C06B 47/14 , B01F 17/16 , C08F 8/32**

(30) Priority: **23.02.88 AU 6920/88**

(43) Date of publication of application: **06.09.89 Bulletin 89/36**

(84) Designated Contracting States: **DE ES FR IT SE**

(71) Applicant: **ICI AUSTRALIA OPERATIONS PROPRIETARY LIMITED**
**ICI House 1 Nicholson Street**
**Melbourne Victoria 3000(AU)**

(72) Inventor: **Christoforou, Nicholas**
**367 Lygon Street**
**East Brunswick Victoria 3057(AU)**
Inventor: **Moody, Keith**
**1 Thaxted Court**
**Watsonia North Victoria 3087(AU)**
Inventor: **Snare, Margaret**
**103 Darebin Road**
**Thornbury Victoria 3071(AU)**

(74) Representative: **Reid, Thomas James et al**
**Imperial Chemical Industries PLC Legal Department: Patents PO Box 6 Bessemer Road**
**Welwyn Garden City Herts, AL7 1HD(GB)**

(54) **Explosive composition.**

(57) An emulsion explosive composition comprising a discontinuous phase comprising an oxygen-releasing salt, a continuous water-immiscible organic phase and an emulsifier component comprising a condensation product of a poly[alk(en)yl]succinic acid and/or anhydride with an amine of formula I

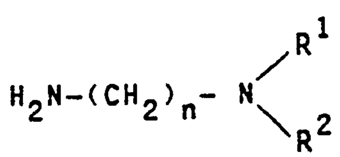

I

and wherein either $R^1$ is selected from the group consisting of hydrogen, alkyl and hydroxyalkyl and $R^2$ is hydroxyalkyl; or $R^1$ and $R^2$ together form a saturated or unsaturated nitrogen containing heterocyclic ring of 5 or 6 constituent ring members, which heterocyclic ring is optionally substituted by alkyl.

EP 0 331 306 A1

## EXPLOSIVE COMPOSITION

This invention relates to an emulsion explosive composition. and to emulsifiers for use therein.

Commercially available emulsion explosives are commonly of the water-in-oil type wherein discrete droplets of an aqueous solution of an oxygen-supplying source are emulsified in a continuous phase within a continuous organic fuel phase. Such water-in-oil emulsion explosive compositions have been described in, for example. US Patents 3 447 978, 3 674 578, 3 770 522, 4 104 092, 4 111 727, 4 149 916 and 4 149 917.

In some applications, the water content in the oxidizer phase may be reduced to very low levels, for example less than 4%, or even completely eliminated. Such melt-in-oil emulsion explosives have been described in, for example, US Patent 4 248 644. Throughout this specification the term "emulsion explosive composition" embraces both water-in-oil or melt-in-oil types.

In these emulsion explosive compositions, surface tension modifying emulsifiers are used to promote subdivision in the continuous phase. The emulsifiers also have a stabilizing effect on the emulsion, preventing breakdown by inhibiting coalescence and agglomeration of the droplets.

In addition, the droplets of oxidizer phase are inherently metastable and exhibit a tendency to crystallize. Crystal growth impairs the sensitivity to detonation of the emulsion explosive compositions, and in severe cases the interlocking of crystals may produce a solid composition which is very difficult to prime. Such emulsion explosive compositions are prone to a progressive deterioration of explosive performance both during storage and transportation of the explosives prior to use. Further, various additives such as solid ammonium nitrate and microballoons which are commonly used in emulsion explosives tend to act as nucleating agents and may lead to, or increase, crystal growth.

A variety of emulsifier types and blends are disclosed in the art. Australian Patent Application No. 40006/85 (Cooper and Baker) discloses emulsion explosive compositions in which the emulsifier is a conductivity modifier. Included among such emulsifiers are condensation products of poly[alk(en)yl]succinic anhydride with amines such as ethylene diamine, diethylene triamine, dimethylaminopropylamine and ethanolamine.

The present applicants have confirmed the excellent storage stability of emulsion compositions comprising such modifiers and have now found that a selected group of new condensation products provides particular advantages in preparation and performance of emulsion explosives.

The performance of emulsifiers for water-in-oil emulsion explosives cannot be measured by any single parameter. In determining the performance of an emulsion explosive, it is necessary to consider a number of parameters including ease of formation of the emulsion, droplet size of the discontinuous phase, stability of the emulsion against phase separation, stability of the emulsion against crystallization in the discontinuous phase of the oxidizer salt and conductivity of the emulsion. Further, when solid matter is added to emulsion explosives, the crystallization in the discontinuous phase of the oxidizer salt is increased and thus the sensitivity of the composition is reduced.

While particular emulsifiers from the prior art may provide excellent results with respect to one or more of these parameters, the compositions we provide achieve with respect to all of these parameters a level of excellence that hitherto has not been generally attainable.

Accordingly we provide an emulsion explosive composition comprising a discontinuous phase comprising an oxygen-releasing salt, a continuous water-immiscible organic phase and an emulsifier component comprising a condensation product of a poly[alk(en)yl]succinic acid and/or anhydride with an amine of formula I

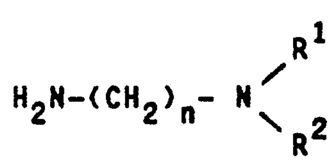

I

wherein either $R^1$ is selected from the group consisting of hydrogen, alkyl and hydroxyalkyl and $R^2$ is hydroxyalkyl; or $R^1$ and $R^2$ together form a saturated or unsaturated nitrogen containing heterocyclic ring of 5 or 6 constituent ring members, which heterocyclic ring is optionally substituted by alkyl.

In the poly[alk(en)yl] succinic acid and/or anhydride, preferably the poly[alk(en)yl] moiety incorporates a backbone sequence in the range of from 10 to 500 linked atoms which may be carbon atoms, or predominantly carbon atoms interrupted by heteroatoms such as oxygen or nitrogen.

A particularly preferred poly[alk(en)yl] is a saturated or unsaturated hydrocarbon chain which is a polymer of a mono-olefin, the chain containing in the range of from 40 to 500 carbon atoms. Examples of such polyolefins include those derived from $C_2$ to $C_6$ olefins such as ethylene, propylene, 1-butene, isoprene and particularly isobutene.

The integer n is preferably 1,2 or 3 and most preferably 2.

$R^1$ is preferably selected from the group consisting of alkyl and hydroxyalkyl. When $R^1$ is alkyl it is preferably $C_1$ to $C_{18}$ alkyl, more preferably $C_1$ to $C_{10}$ alkyl and most preferably $C_1$ to $C_6$ alkyl. When $R^1$ is hydroxyalkyl, it is preferably $C_1$ to $C_{12}$ hydroxyalkyl and most preferably $C_1$ to $C_6$ hydroxyalkyl.

$R^2$ is preferably selected from the group consisting of $C_1$ to $C_{20}$ hydroxyalkyl, more preferably $C_1$ to $C_{12}$ hydroxyalkyl and most preferably $C_1$ to $C_6$ hydroxyalkyl.

When $R^1$ and $R^2$ together form a heterocyclic ring, it is preferred that the group.

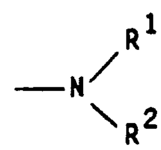

is a substituted or unsubstituted heterocyclic ring selected from the group consisting of:
1-pyrrolidinyl,
1-piperazinyl, 4-methyl-1-piperazinyl,
1-piperidinyl, and 4-morpholinyl,

It is particularly preferred that compounds of formula I have the formula shown in formula II:

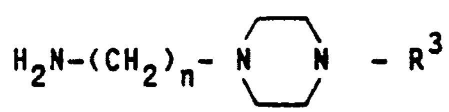

II

wherein $R^3$ is selected from hydrogen, $C_1$ to $C_4$ alkyl and $C_1$ to $C_4$ hydroxyalkyl; and n is 2 or 3, most preferably n is 2.

The condensation product of a poly[alk(en)yl] succinic acid and/or anhydride with an amine of formula I will be an imide of formula III and/or an amide of either formula IVa or IVb wherein A is poly[alk(en)yl]

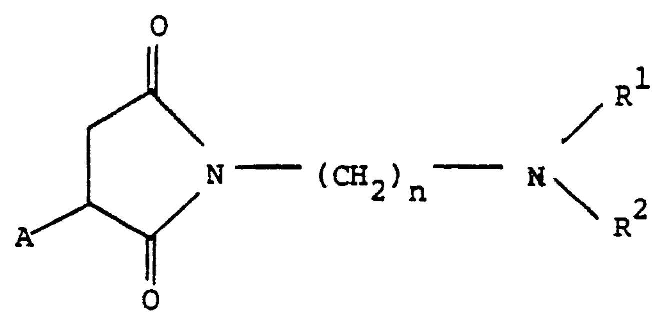

III

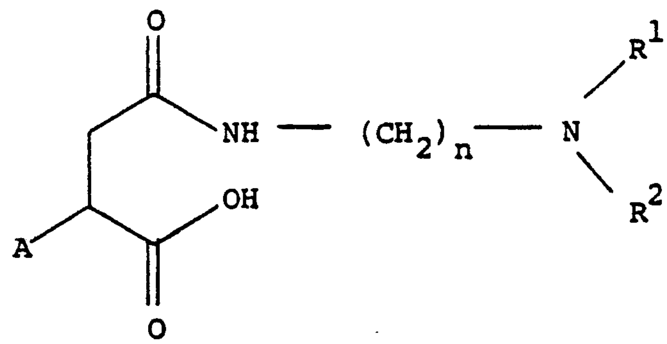

IVa

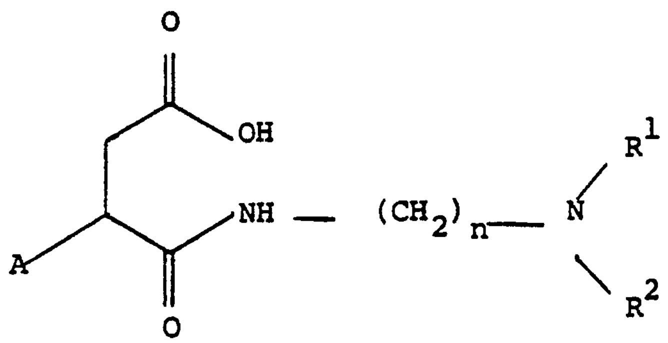

IVb

It is particularly preferred that the condensation product comprises the succinimide derivative, that is, the compound of formula III and more preferably at least 70% w/w of said condensation product is said succinimide derivative.

Specific examples of preferred condensation products include
N-[2-(1-piperazinyl)ethyl]-polyisobutylene succinimide and
N-[2-(piperidinyl)ethyl]-polyisobutylenesuccinimide.

Suitable oxygen-releasing salts for use in the discontinuous phase of the composition of the present invention include the alkali and alkaline earth metal nitrates, chlorates and perchlorates, ammonium nitrate, ammonium chlorate, ammonium perchlorate and mixtures thereof. The preferred oxygen-releasing salts include ammonium nitrate, sodium nitrate and calcium nitrate. More preferably, the oxygen-releasing salt comprises ammonium nitrate or a mixture of ammonium nitrate and sodium or calcium nitrates.

Typically, the oxygen-releasing salt component of the compositions of the present invention comprises from 45 to 95% and preferably from 60 to 90% by weight of the total composition.

In compositions wherein the oxygen-releasing salt comprises a mixture of ammonium nitrate and sodium nitrate the preferred composition range for such a blend is from 5 to 80 parts of sodium nitrate for every 100 parts of ammonium nitrate. In particular, the preferred compositions of the present invention comprise an oxygen-releasing salt component consisting of 60 to 90% by weight (of the total composition) ammonium nitrate or mixtures of from 0 to 40% by weight (of the total composition) sodium or calcium nitrates and from 50 to 90% by weight (of the total composition) ammonium nitrate.

Typically, the amount of water employed in the compositions of the present invention is in the range of from 0 to 30% by weight of the total composition. Preferably the amount employed is from 4 to 25%, and more preferably from 6 to 20%, by weight of the total composition.

The water-immiscible organic phase component of the composition of the present invention comprises the continuous "oil" phase of the emulsion explosive and is the fuel. Suitable organic fuels for use in the water-immiscible organic phase include aliphatic, alicyclic and aromatic compounds and mixtures thereof which are in the liquid state at the formulation temperature. Suitable organic fuels may be chosen from fuel oil, diesel oil, distillate, furnace oil, kerosene, naphtha, waxes, (eg. microcrystalline wax, paraffin wax and slack wax), paraffin oils, benzene, toluene, xylenes, asphaltic materials, polymeric oils such as the low molecular weight polymers of olefins, animal oils, fish oils, and other mineral, hydrocarbon or fatty oils, and mixtures thereof. Preferred organic fuels are liquid hydrocarbons, generally referred to as petroleum distillates, such as gasoline, kerosene, fuel oils and paraffin oils.

Typically, the organic fuel or continuous phase of the emulsion explosive composition of the present invention comprises from 2 to 15% by weight and preferably 3 to 10% by weight of the total composition.

The emulsifying agent component of the composition of the present invention may further comprise additional emulsifiers chosen from the wide range of emulsifying agents known in the art to be useful in the preparation of emulsion explosive compositions. Examples of such emulsifying agents include alcohol alkoxylates, phenol alkoxylates, poly(oxyalkylene) glycols, poly(oxyalkylene) fatty acid esters, amine alkoxylates, fatty acid esters of sorbitol and glycerol, fatty acid salts, sorbitan esters, poly(oxyalkylene) sorbitan esters, fatty amine alkoxylates, poly(oxyalkylene) glycol esters, fatty acid amides, fatty acid amide alkoxylates, fatty amines, quaternary amines, alkyloxazolines, alkenyloxazolines, imidazolines, alkyl-sulfonates, alkylarylsulfonates, alkylsulfosuccinates, alkylphosphates, alkenylphosphates, phosphate esters, lecithin, copolymers of poly(oxyalkylene) glycols and poly(12-hydroxystearic acid), and mixtures thereof. Among the preferred emulsifying agents are the 2-alkyl- and 2-alkenyl-4,4′-bis (hydroxymethyl) oxazoline, the fatty acid esters of sorbitol, lecithin, copolymers of poly(oxyalkylene) glycols and poly(12-hydroxystearic acid), and mixtures thereof, and particularly sorbitan monooleate, sorbitan sesquioleate, 2-oleyl- 4,4′-bis (hydroxymethyl) oxazoline, mixtures of sorbitan sesquioleate, lecithin and a copolymer of poly(oxyalkylene) glycol and poly (12-hydroxystearic acid), and mixtures thereof. Where used, particularly preferred additional emulsifiers include sorbitan esters such as sorbitan monooleate.

Typically, the emulsifying agent component of the composition of the present invention comprises up to 5% by weight of the total composition. Higher proportions of the emulsifying agent may be used and may serve as a supplemental fuel for the composition but in general it is not necessary to add more than 5% by weight of emulsifying agent to achieve the desired effect. One of the advantages of the compositions of the present invention is that stable emulsions can be formed using relatively low levels of emulsifying agent, and for reasons of economy it is preferable to keep to amount of emulsifying agent used to the minimum required to have the desired effect. The preferred level of emulsifying agent used is in the range from 0.1 to 2.0% by weight of the total composition.

If desired other, optional, fuel materials, hereinafter referred to as secondary fuels, may be incorporated into the compositions of the present invention in addition to the water-immiscible organic fuel phase. Examples of such secondary fuels include finely divided solids, and water-immiscible organic liquids which can be used to partially replace water as a solvent for the oxygen-releasing salts or to extend the aqueous solvent for the oxygen-releasing salts. Examples of solid secondary fuels include finely divided materials such as: sulfur; aluminium; and carbonaceous materials such as gilsonite, comminuted coke or charcoal, carbon black, resin acids such as abietic acid, sugars such as glucose or dextrose and other vegetable products such as starch, nut meal, grain meal and wood pulp. Examples of water-miscible organic liquids include alcohols such as methanol, glycols such as ethylene glycol, amides such as formamide and amines such as methylamine.

Typically, the optional secondary fuel component of the compositions of the present invention comprise from 0 to 30% by weight of the total composition.

It lies within the invention that there may also be incorporated into the emulsion explosive compositions hereinbefore described other substances or mixtures of substances which are oxygen-releasing salts or which are themselves suitable as explosive materials. As a typical example of such a modified emulsion explosive composition reference is made to compositions wherein there is added to and mixed with an emulsion explosive composition as hereinbefore described up to 90% w/w of an oxidizing salt such as ammonium nitrate and fuel oil and commonly referred to by those skilled in the art as "ANFO". The compositions of "ANFO" are well known and have been described at length in the literature relating to explosives. It also lies within the invention to have as a further explosive component of the composition well known explosive materials comprising one or more of, for example, trinitrotoluene, nitroglycerine or pentaerythritol tetranitrate.

Accordingly there is provided an explosive composition comprising as a first component an emulsion explosive composition as hereinbefore described and as a second component an amount of material which is an oxidizing salt or which is in its own right an explosive material.

If desired, the aqueous solution of the compositions of the present invention may comprise optional thickening agents which optionally may be crosslinked. The thickening agents, when used in the compositions of the present invention, are suitably polymeric materials, especially gum materials typified by the galactomannan gums such as locust bean gum or guar gum or derivatives thereof such as hydroxypropyl guar gum. Other useful, but less preferred, gums are the so-called biopolymeric gums such as the heteropolysaccharides prepared by the microbial transformation of carbohydrate mateial, for example the treatment of glucose with a plant pathogen of the genus Xanthomonas typified by Xanthomonas campestris. Other useful thickening agents include synthetic polymeric materials and in particular synthetic polymeric materials which are derived, at least in part, from the monomer acrylamide.

Typically, the optional thickening agent component of the present invention comprises from 0 to 2% by

weight of the total composition.

As indicated above, when used in the compositions of the present invention, the thickening agent optionally may be crosslinked. It is convenient for this purpose to use conventional crosslinking agents such as zinc chromate or a dichromate either as a separate entity or as a component of a conventional redox system such as a mixture of potassium dichromate and potassium antimony tartrate.

Typically, the optional crosslinking agent component of the compositions of the present invention comprises from 0 to 0.5% and preferably from 0 to 0.1% by weight of the total composition.

The pH of the emulsion explosive compositions of the present invention is not narrowly critical. However, in general the pH is between 0 to 8 and preferably the pH is between 1 and 6, and may be controlled by suitable addition of conventional additives, for example inorganic or organic acids and salts.

The emulsion explosive compositions of the present invention may be prepared by a number of methods. When the composition is a water-in-oil type emulsion explosive, one preferred method of manufacture includes: dissolving said oxygen-releasing salts in water at a temperature above the fudge point of the salt solution, preferably at a temperature in the range from 25 to 110 °C, to give an aqueous salt solution; combining said aqueous salt solution, said water-immiscible organic phase, said water-in-oil emulsifying agent, with rapid mixing to form a water-in-oil emulsion; and mixing until the emulsion is uniform;

We believe the emulsifiers used in emulsion explosive compositions of the present invention are novel. Accordingly we provide a product of a condensation reaction of an amine of Formula I

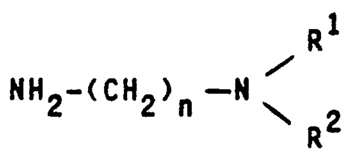

I

and a poly[alk(en)yl]succinic anhydride and/or acid wherein n is selected from the integers 1 to 3 inclusive and wherein either $R^1$ is selected from the group consisting of hydrogen, alkyl and hydroxyalkyl and $R^2$ is hydroxyalkyl; or $R^1$ and $R^2$ together form a saturated or unsaturated nitrogen-containing heterocyclic ring of 5 or 6 constituent ring members, which heterocyclic ring is optionally substituted by alkyl.

As hereinabove discussed, products of said condensation reaction may be amides of formula IVa or IVb, imides of formula III or mixtures thereof.

Typical examples of products of said condensation reaction are shown below in Table I. Only the succinimide derivative is shown, however, it will be understood that the proportion of succinimide to succinamide will be dependant on reaction conditions. A is polyisobutylene of average molecular weight in the range 800 to 1500.

TABLE 1

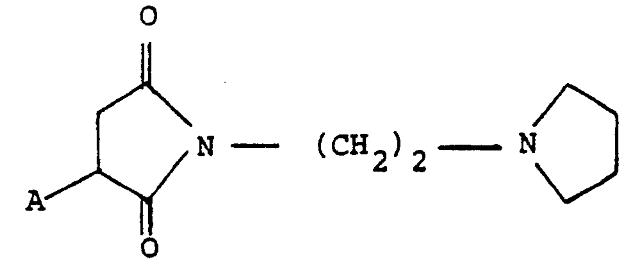

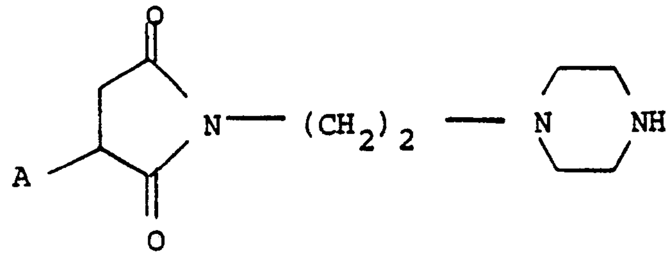

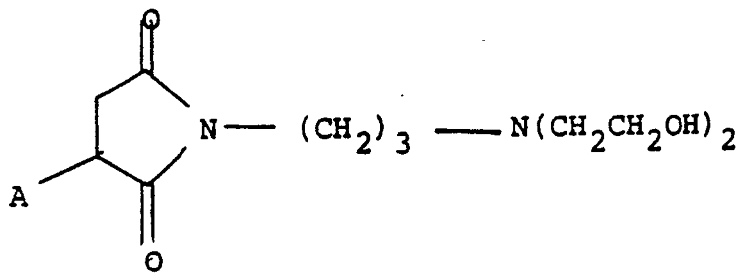

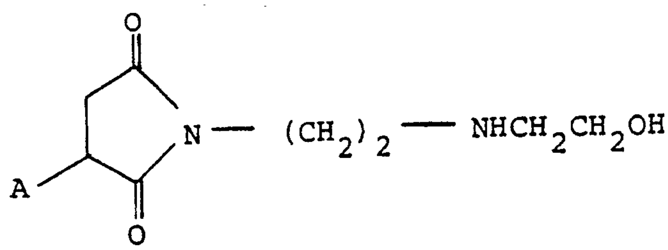

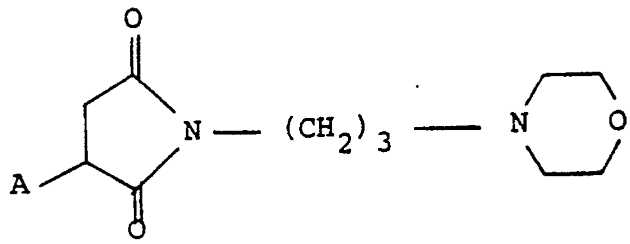

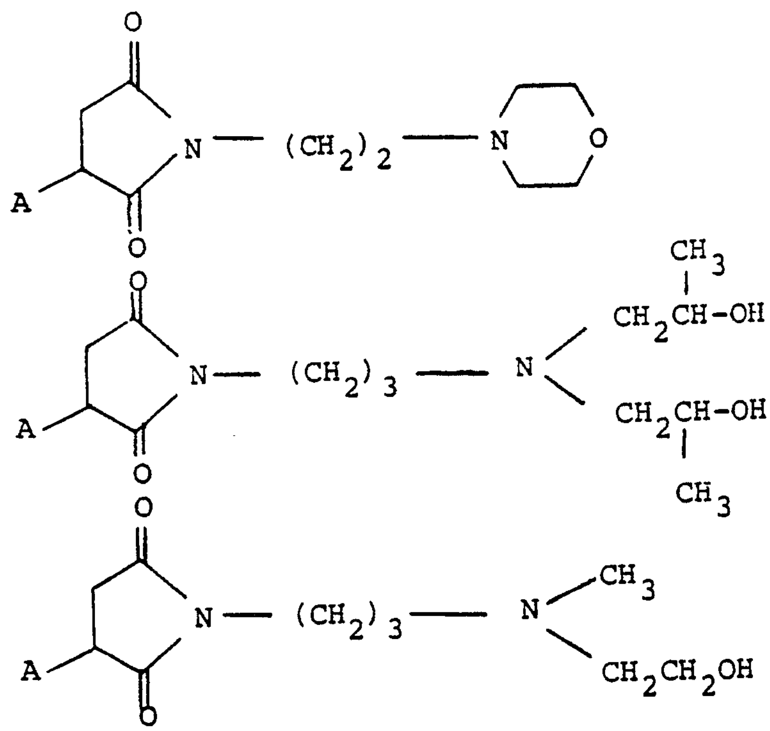

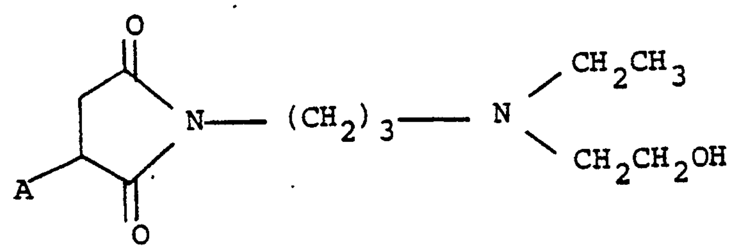

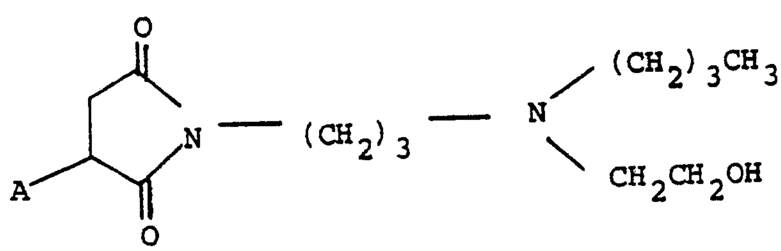

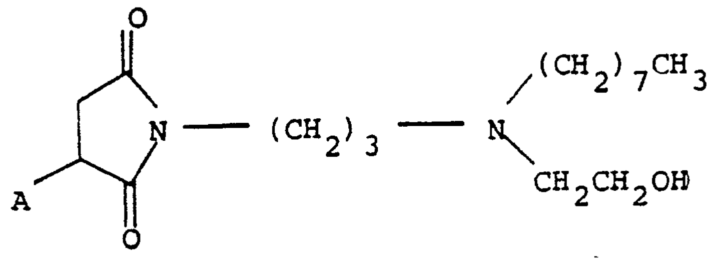

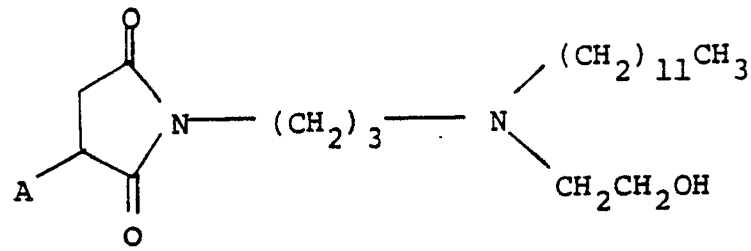

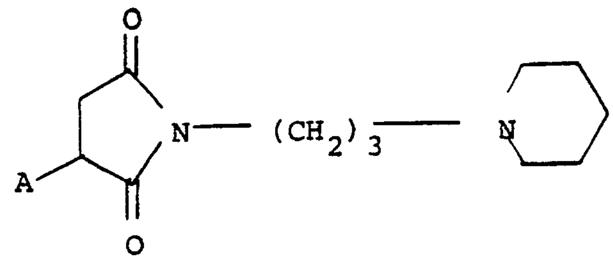

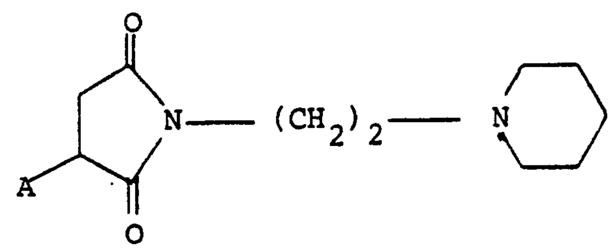

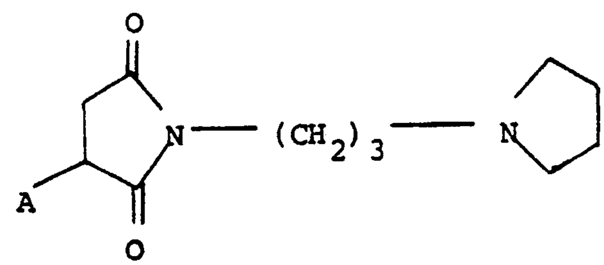

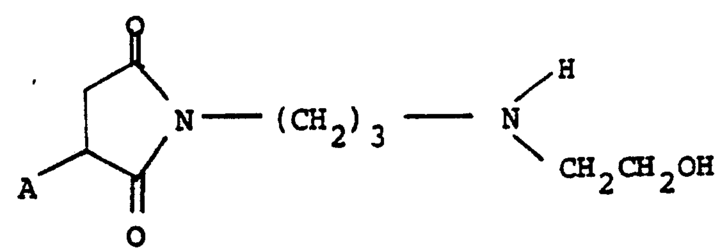

The poly[alk(en)yl]succinic anhydride or acid is typically quite viscous and therefore difficult to handle. In order to promote easy handling, it is convenient for said poly[alk(en)yl]succinic anhydride or acid to be provided in a diluent. Oils provide particularly useful diluents as they may be left in the condensation product and allowed to form part of the water-immiscible organic phase of the emulsion explosive.

Therefore, according to a further embodiment of the present invention we provide a product of a condensation reaction as hereinabove defined in a diluent. A particularly preferred diluent is paraffin oil, although other oils, such as fuel oil, distillate or mixtures may be used.

The invention is now demonstrated by but in no way limited to the following examples in which all parts and percentages are on a weight basis unless otherwise stated.

Example A

The emulsifiers of formula I shown in Table I were prepared according to the following procedures by condensation reaction of the amine shown in Table II with poly(isobutylene)succinic anhydride.

## TABLE II

| Amine starting material | Emulsifier | Emulsifier Number |
| --- | --- | --- |
| 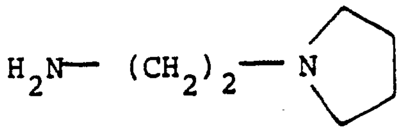 | 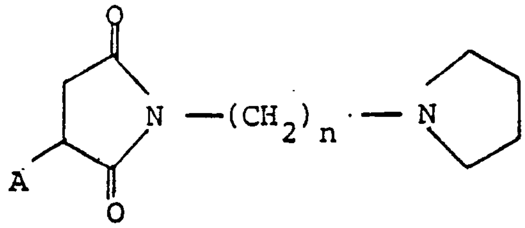 | 1 |
| 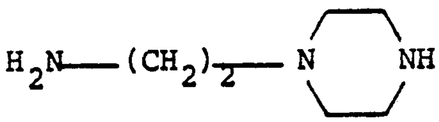 | 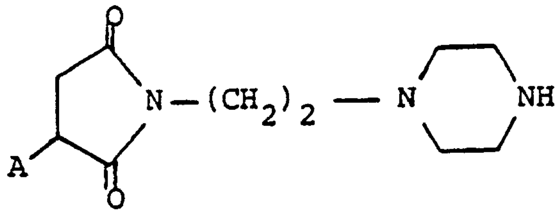 | 2 |
| $H_2N—(CH_2)_3—N(CH_2CH_2OH)_2$ | 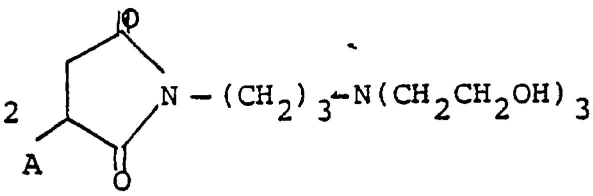 | 3 |
| $H_2N—(CH_2)_2—NHCH_2CH_2OH$ | 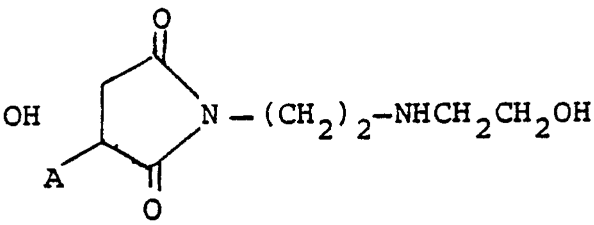 | 4 |
| 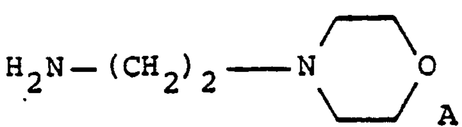 | 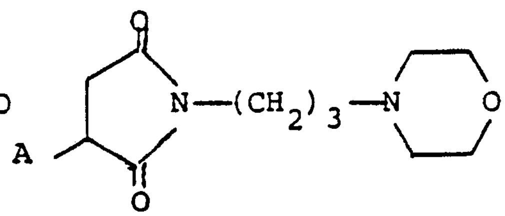 | 5 |
| 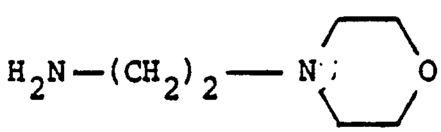 | 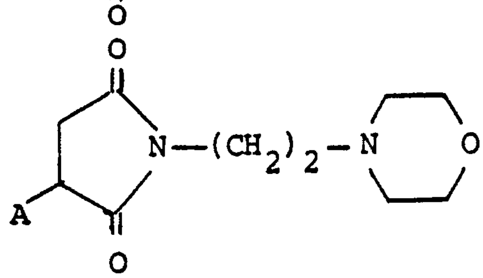 | 6 |

A is polyisobutylene of average molecular weight in the range 800 to 1500.

### Method 1

"MOBILAD C207" (MOBILAD is a trade mark) (a poly(isobutylene) succinic anhydride having a molecular weight in the range of from 800 to 1200 in a paraffin diluent) was heated with an approximately

equimolar amount of the amine starting material to a temperature in the range of from 140 to 150° C.

Method 2

Poly(isobutylene) succinic anhydride of average molecular weight 1190 and containing 0.763 mmoles anhydride /g in a paraffin diluent was heated with an equimolar quantity of the amine under reflux in toluene or xylene solution. The water formed in the imidization reaction was collected in a Dean and Stark water separator.

The method is specifically exemplified below for Compound 2: Poly(isobutylene) succinic anhydride (250 g, 190.8 mmoles anhydride), N-(2-aminoethyl)piperazine (24.65 g, 190.8 mmoles) and toluene (50 ml) were heated under reflux in an oil bath at 175° C for 4.5 hr with collection of water (3.6 g) (theoretical water expected, 3.4 g). The bulk of the water was collected in the first 2 hr. Toluene was stripped off to give the final product (271.0 g). Infrared spectrum : 1775, 1705 $cm^{-1}$ (imide C=0). A 96% conversion to the imide was confirmed by the low acid value of the product, 0.031 mmoles/g.

In the preparation of emulsion explosives according to the following examples it will be understood that the term "Emulsifier" means the condensation products of an amine and a poly[alk(en)yl]succinic acid or anhydride as hereinabove defined. Poly[alk(en)yl]succinic anhydrides are commercially available in oil diluents. It is convenient to perform the condensation reaction in said diluent.

Thus the condensation products remain in the oil diluent. In the following examples the term "Emulsifier" refers to the condensation products, and any oil diluent is considered part of the water-immiscible organic phase of the emulsion explosive. For example, if a poly[alk(en)yl]succinic anhydride has a paraffin oil diluent, any paraffin oil remaining with the Emulsifier after preparation according to the foregoing Emulsion Preparations is included in the total paraffin oil component of the composition.

Example 1 (E1)

An emulsion of the type suitable for use as a packaged explosives was prepared using the following components. The emulsifier used was emulsifier No. 1.

| Component | Part w/w % |
|---|---|
| Chemically pure ammonium nitrate | 64.04 |
| Sodium nitrate | 12.81 |
| Water | 10.88 |
| Wax | 2.35 |
| Paraffin oil | 1.62 |
| Emulsifier * | 1.20 |
| Aluminium | 3.90 |
| C15/250 microballoons ** | 3.20 |

* The emulsifier used was emulsifier number 1 prepared according to Emulsifier Preparation 1.

** C15/250 microballoons are glass microspheres commercially available from 3M Australia Pty Ltd.

Emulsions were made with a Hobart N50 planetary mixer.

The emulsifier was added to the oil phase at a temperature of 90° C, the oil phase consisting of the wax and paraffin oil components.

A coarse emulsion was prepared by adding the aqueous phase, consisting of a solution of the nitrate salt components in water, to the oil phase at approximately 90° C. The emulsion was observed to form relatively easily. The mixer was operated with a whisk attachment at speed 2 for 2 minutes followed by a further 10 minutes at speed 3 to obtain the primary emulsion.

Droplet size of the emulsion was typically in the range 1 to 3 um. Conductivity of emulsion at 75° C was 3800 $pSm^{-1}$.

Aluminium and microballoons were gently mixed into the primary emulsion then blended with a leaf paddle for 2.5 minutes at speed 1. The crystal content of the cooled emulsion was low.

Example 2 (E2)

An emulsion explosive was prepared according to Example 1 except that the emulsifier used was Emulsifier Number 2 prepared according to Emulsifier Preparation 2.

The droplet size of the emulsion was typically in the range of 3 to 5 um. Conductivity of the emulsion at 75 °C was 8100 $pSm^{-1}$.

The crystal content of the cooled emulsion was low, with negligible change after 15 months ambient storage.

Example 3 (E3)

An emulsion explosive was prepared according to Example 1 except that the emulsifier used was Emulsifier Number 3.

The droplet size of the emulsion was typically in the range of 3 to 5 um. Conductivity of the emulsion at 75 °C was 6000 $pSm^{-1}$.

The crystal content of the cooled emulsion was low, with negligible change after 15 months ambient storage.

Example 4 (E4)

An emulsion explosive was prepared according to Example 1 except that the emulsifier used was Emulsifier Number 4.

The droplet size of the emulsion was typically in the range of 1 to 5 um. Conductivity of the emulsion at 75 °C was 8600 $pSm^{-1}$.

The crystal content of the cooled emulsion was low, with negligible change after 16 months ambient storage.

Comparative Example A (CEA)

An emulsion explosive was prepared according to Example 1 except that the emulsifier of that examples was replaced with the 1:1 adduct of poly(isobutylene)-succinic anhydride and diethanolamine. The adduct was prepared by heating the reagents at 85 to 90 °C for 1 hour in a paraffin oil diluent.

It was observed that the emulsion was more difficult to form than emulsions prepared according to the present invention.

The emulsion droplet size was typically in the range of 1 to 8 um. Conductivity of the emulsion at 75 °C was 980 $pSm^{-1}$.

The crystal content of the cooled emulsion was low.

Comparative Example B (CEB)

An emulsion explosive was prepared according to Example 1 except that the emulsifier of that example was replaced with the 1:1 adduct of polyisobutylene succinic anhydride and diethylenetriamine.

The emulsifion formed quite easily. The droplet size of the emulsion was tyically in the range 3 to 10 um. Conductivity of the emulsion at 75 °C was 6600 $pSm^{-1}$.

The crystal content of the cooled emulsion was relatively high after the addition of the microballoons, but did not significantly alter after 20 months ambient storage.

Comparative Example C (CEC)

An emulsion of the type suitable for use in packaged explosives was prepared using the following components.

| Component | Part w/w % |
|---|---|
| Chemically pure ammonium nitrate | 64.04 |
| Sodium nitrate | 12.81 |
| Water | 10.88 |
| Wax | 3.14 |
| Paraffin oil | 0.63 |
| Sorbitan monooleate | 1.4 |
| Aluminium | 3.9 |
| C15/250 microballoons | 3.2 |

Emulsions were made with a Hobart N50 planetary mixer.

The sorbitan monooleate was added to the oil phase at a temperature of 90° C, the oil phase consisting of the wax and paraffin oil components.

A coarse emulsion was prepared by adding the aqueous phase, consisting of a solution of the nitrate salt components in water, to the oil phase at approximately 90° C. The emulsion was observed to form easily. The mixer was operated with a whisk at speed 2 for 2 minutes followed by a further 10 minutes at speed 3 to obtain the primary emulsion.

Droplet size of the emulsion was typically in the range of 1 to 3 um. Conductivity of the emulsion at 75° C was 590,000 $pSm^{-1}$.

Aluminium and microballoons were gently mixed into the primary emulsion then blended with a leaf paddle for 2.5 minutes at speed 1.

The crystal content of the cooled emulsion was low, however the crystal content increased significantly during storage.

SUMMARY OF RESULTS OF PACKAGED FORMULATIONS

(See Table III)

TABLE III

| Example | Ease of formation of emulsion | Crystallization after cooling | Crystallization after storage | Droplet Size (um) | Emulsion Conductivity at 75° C ($pSm^{-1}$) |
|---|---|---|---|---|---|
| E1 | Easy | Low | - | 1-3 | 3800 |
| E2 | Easy | Low | Low at 15 months | 3-5 | 8100 |
| E3 | Easy | Low | Low at 15 months | 3-5 | 6000 |
| E4 | Easy | Low | Low at 16 months | 1-5 | 8600 |
| CEA | More difficult | Low | Low at 15 months | 1-8 | 980 |
| CEB | Easy | High | - | 3-10 | 6660 |
| CEC | Easy | Low | Significant Increase | 1-3 | 590000 |

Example 5

An emulsion explosive of the type suitable for use as a bulk explosive was prepared using the following components in which the Emulsifier was Emulsifier number 2.

| Component | Part w/w % |
|---|---|
| Chemically pure ammonium nitrate | 73.9 |
| Water | 18.5 |
| Distillate | 6.1 |
| Paraffin oil * | 0.4 |
| Emulsifier | 1.1 |

* The paraffin oil is diluent from the emulsifier preparation

An aqueous solution was prepared by mixing the ammonium nitrate and water at 70° C and this solution was added with rapid stirring to a mixture of the emulsifier and distillate at 80° C.

Stirring was continued for a fixed period after the addition was complete and the droplet size was observed to be in the range of 4 to 10 um. The emulsion was then further refined to a viscosity of 24 Pa.s. The emulsion conductivity was 5600 $pSm^{-1}$. The emulsion was split into two portions for testing.

The first portion was stored at ambient temperature for 4 months and the level of crystallization was observed to be very low.

The second portion of emulsion explosive was combined with solid prilled ammonium nitrate by mixing at 65 to 70° C, 3 parts prilled ammonium nitrate with 7 parts emulsion explosive.

The crystal content of the so-formed solid prilled ammonium nitrate/emulsion explosive composition after 1 week ambient storage was low.

Example 6 (E6)

The procedure of Example 5 was repeated using Emulsifier Number 3. The results are shown in Table III.

Example 7 (E7)

The procedure of Example 5 was repeated using Emulsifier Number 4. The results are shown in Table III.

Comparative Example D (CED)

Dimethylaminopropylamine and poly(isobutylene)succinic anhydride in a paraffin diluent ("MOBILAD" C207) were mixed in 1:1 molar ratio with respect to polyisobutylene succinic anhydride and the mixture was refluxed with toluene in a Dean and Stark apparatus for 3 hours at 115° C after which time water removal was complete. Toluene was then removed on a rotary evaporator.

The procedure of Example 5 was repeated using the emulsifier prepared above. The reults are shown in Table III.

Comparative Example E (CEE)

An emulsion explosive of the type suitable for use as a bulk explosive was prepared using the following components.

| Component | Part w/w % |
|---|---|
| Chemically pure ammonium nitrate | 73.9 |
| Water | 18.5 |
| Distillate | 5.8 |
| Sorbitan monooleate | 1.8 |

An aqueous solution was prepared by mixing the ammonium nitrate and water at 70° C and this solution was added with rapid stirring to a mixture of sorbitan monooleate and distillate at 80° C.

Stirring was continued for a period after the addition was complete and the droplet size was observed to be in the range of 3 to 10 um. The emulsion conductivity was 13900 $pSm^{-1}$. The emulsion was split into two portions for testing.

The first portion was stored at ambient temperature for 4 months and the level of crystallization was observed to be very extensive.

The second portion of emulsion explosive was combined with solid prilled ammonium nitrate by mixing at 65 to 70° C, 3 parts prilled ammonium nitrate with 7 parts emulsion explosive.

The crystal content of the so-formed solid prilled ammonium nitrate/emulsion explosive composition after 1 week ambient storage was observed to be very extensive.

**SUMMARY OF RESULTS OF BULK FORMULATIONS**

(See Table IV)

TABLE IV

| Example | Droplet Size (um) | Emulsion Conductivity at 75° C ($pSm^{-1}$) | Crystallization in emulsion after 4 months ambient storage | Crystallization in emulsion containing solid prilled ammonium nitrate after 1 week ambient storage |
|---|---|---|---|---|
| E5 | 4-10 | 5600 | Very low | Low |
| E6 | 3-8 | 6400 | Very low | Moderate |
| E7 | ·6-18 | 6000 | Very low | Moderate |
| CED | 2-8 | 4200 | Quite high (but not totally cryatallized) | Quite high (but not totally crystallized |
| CEE | 3-10 | 13900 | Very extensive | Very extensive |

Example 8

(a) An emulsion explosive of the type suitable for use as a bulk explosive was prepared using the following components according to the procedure below.

| Component | Parts w/w % |
|---|---|
| Nitropril * | 74.4 |
| Water | 18.6 |
| Oxalic acid dihydrate | 0.7 |
| Distillate | 5.3 |
| Paraffin oil ** | 0.2 |
| Emulsifier *** | 0.8 |

* "NITROPRIL" is a trade mark of ICI Australia Operations Pty Ltd use for solid prilled ammonium nitrate.
** Paraffin oil is diluent from the emulsifier preparation.
*** Emulsifier is Emulsifier Number 2 prepared according to Emulsifier Preparation.

A solution of the prilled ammonium nitrate and oxalic acid in water was prepared and maintained at 80 °C for about 4 hours, then the pH was adjusted to 4.3. The solution was then added with rapid stirring to a mixture of the fuel and emulsifier. Stirring was continued for a short period after completion of the addition.

(b) A blend of solid prilled ammonium nitrate and an emulsion explosive was prepared by mixing 2 parts prilled ammonium nitrate with 8 parts of water-in-oil emulsion explosive prepared according to the procedure of part (a).

The emulsion was refined to viscosity of 20 Pa.s. The emulsion had a conductivity at 20 °C of 5000 $pSm^{-1}$ and content. The emulsion was split into two portions for testing.

The first portion was stored for 4 months at ambient temperature and it was observed to have a moderately low crystal content.

The second portion was combined with additional NITROPRIL at 65 to 70 °C by mixing 2 parts NITROPRIL with 8 parts emulsion explosive. Initially, after blending in the NITROPRIL the crystal content was low. After 1 week storage at ambient temperature the crystal level was moderate and even after 4 months' ambient storage the blend remained soft and was not totally crystallized.

Example 9 (E9)

An emulsion explosive of the type suitable for use as a bulk explosive was prepared using the following components in a continuous process according to the procedure below.

| Component | Part w/w % |
|---|---|
| NITROPRIL | 73.1 |
| Water | 18.3 |
| Oxalic acid dihydrate | 1.0 |
| Distillate | 0.4 |
| Paraffin Oil * | 6.1 |
| Emulsifier ** | 1.1 |

* Paraffin oil comprises diluent from emulsifier preparation.
** Emulsifier is Emulsifier Number 2 prepared according to Emulsion Preparation .

A solution of the prilled ammonium nitrate and oxalic acid in water was prepared and maintained at 80 °C for about 4 hours, then the pH was adjusted to 4.1. The solution was then continuously combined with a mixture of the fuel and emulsifier using a blender operated at 1100 rpm. The emulsion was formed at a rate of 21 kg/min.

The emulsion was then blended with additional NITROPRIL (3 parts NITROPRIL to 7 parts emulsion). The NITROPRIL was continuously added the emulsion at a rate of 9 kg/min. The so-formed blasting composition was pumped through a 1 inch diameter hose and it was observed that the condition of the emulsion was very good, with a low level of crystallization in the aqueous oxidizer phase.

Example 10 (E10)

An emulsion of the type suitable for use as a bulk explosive was prepared using the following components in a continuous process according to the procedure below.

| Component | Part w/w % |
|---|---|
| NITROPRIL | 73.1 |
| Water | 18.3 |
| Oxalic acid dihydrate | 1.0 |
| Distillate | 0.4 |
| Paraffin oil * | 6.1 |
| Emulsifier ** | 1.1 |

* Paraffin oil comprises diluent from emulsifier preparation.
** Emulsifier is Emulsifier Number 2 prepared according to Emulsion Preparation .

A solution of the prilled ammonium nitrate and oxalic acid in water was prepared and maintained at 80 °C for about 4 hours, then the pH was adjusted to 1.5.

Then the solution was continuously combined with a mixture of the fuel and emulsifier using a blender operated at 1100 rpm. The emulsion was formed at a rate of 21 kg/min.

Example 11 (E11)

An emulsion explosive of the type suitable for use as a bulk explosive was prepared according to Example 10.

The so-formed emulsion was stored at ambient temperature for 2 months. The emulsion was then pumped through a hose of 1 inch diameter, then blended with NITROPRIL in the ratio (7 parts emulsion to 3 parts NITROPRIL) and then repumped.

Under this severe test of emulsion stability no breakdown was observed.

Example 12 (E13)

An emulsion explosive of the type suitable for use as a bulk explosive was prepared according to Example 10.

The so-formed emulsion was heated to 62 °C and stored at 62 °C for 3 days. The emulsion was then pumped through a hose of 1 inch diameter, then blended with NITROPRIL in the ratio (7 parts emulsion to 3 parts NITROPRIL) and then repumped.

Under this severe test of emulsion stability no breakdown was observed.

Example 13 (E13)

An emulsion explosive of the type suitable for use as a bulk explosive was prepared according to Example 10.

The emulsion was heated to 64 °C and stored at that temperature for 1 month. There was no evidence of emulsion breakdown.

Example 14 (E14)

An emulsion explosive composition was formed with the following formulation according to the procedure described below.

| Component | Part w/w % |
|---|---|
| Chemically pure ammonium nitrate | 42.0 |
| Calcium nitrate * | 37.6 |
| Water | 12.6 |
| Distillate | 6.8 |
| Paraffin oil ** | 0.3 |
| Emulsifier *** | 0.7 |

* Calcium nitrate was obtained from Norsk Hydrox A/S.
** Paraffin oil is diluent from emulsifier preparation.
*** Emulsifier is Emulsifier Number 2 prepared according to Emulsion Preparation

The ammonium nitrate and calcium nitrate were dissolved in water at a temperature of 80 °C and the solution was adjusted to pH 4.5.

The solution was added to a stirred mixture of the fuel and emulsifier. Stirring was continued and an emulsion of viscosity 3000 cp at 60 °C was formed. Good emulsion stability was observed.

## Claims

1. An emulsion explosive composition comprising a discontinuous phase comprising an oxygen-releasing salt, a continuous water-immiscible organic phase and an emulsifier component characterised in that the emulsifier component comprises a condensation product of a poly[alk(en)yl] succinic acid and/or anhydride with an amine of formula I

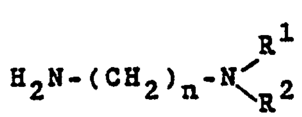

I.

and wherein either $R^1$ is selected from the group consisting of hydrogen, alkyl and hydroxyalkyl and $R^2$ is

hydroxyalkyl; or $R^1$ and $R^2$ together form a saturated or unsaturated nitrogen containing heterocyclic ring of 5 or 6 constituent ring members, which heterocyclic ring is optionally substituted by alkyl.

2. An emulsion explosive composition according to claim 1 characterised in that $R^2$ is selected from the group consisting of $C_1$ to $C_{20}$ hydroxyalkyl preferably $C_1$ to $C_{12}$ hydroxyalkyl and more preferably $C_1$ to $C_6$ hydroxyalkyl; $R^1$ is selected from the group consisting of alkyl, preferably $C_1$ to $C_{18}$ alkyl, more preferably $C_1$ to $C_{10}$ alkyl and most preferably $C_1$ to $C_6$ alkyl and hydroxyalkyl, preferably $C_1$ to $C_{12}$ hydroxyalkyl and more preferably $C_1$ to $C_6$ hydroxyalkyl; and n is selected from the group consisting of 1, 2 and 3, preferably 2.

3. An emulsion explosive composition according to claim 1 or claim 2 characterised in that $R^1$ and $R^2$ together form a heterocyclic ring, and that the group

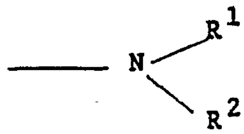

is a substituted or unsubstituted heterocyclic ring selected from the group consisting of:
1-pyrrolidinyl, 3-pyrrolin-1-yl, 1-piperazinyl, 4-methyl-1-piperazinyl and 4-morpholinyl.

4. An emulsion explosive composition according to any one of claims 1 to 3 characterised in that the amine of formula I has the formula shown in formula II:

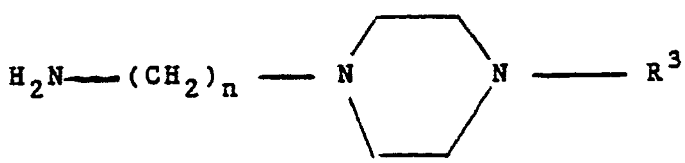

II

wherein $R^3$ is selected from hydrogen, $C_1$ to $C_4$ alkyl and $C_1$ to $C_4$-hydroxyalkyl; and n is 1, 2 or 3, preferably 2.

5. An emulsion explosive composition according to any one of claims 1 to 4 wherein the poly[alk(en)yl] moiety of the poly[alk(en)yl] succinic acid or anhydride is a saturated or unsaturated hydrocarbon chain which chain is a polymer of a mono-olefin, wherein said chain contains in the range of from 40 to 500 carbon atoms, preferably the said polymer being derived from the group consisting of $C_2$ to $C_6$ olefins preferably ethylene, propylene, 1-butene, isoprene and isobutene and preferably wherein said poly[alk(en)-yl] succinic acid and/or anhydride is poly[alk(en)yl] succinic anhydride.

6. An emulsion explosive composition according to any one of claims 1 to 5 characterised in that the condensation product comprises at least 70% by weight of the succinimide derivative of formula III.

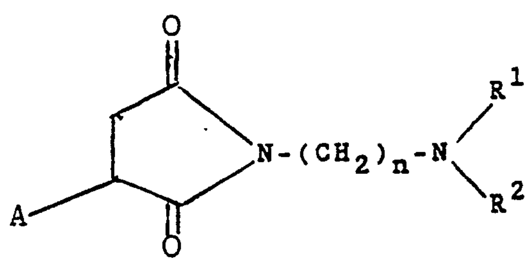

III

wherein A is poly[alk(en)yl]; and $R^1$, $R^2$ and n are as hereinabove defined.

7. An emulsion explosive composition according to any one of claims 1 to 6 characterised in that said oxygen-releasing salt is selected from the group consisting of alkali and alkaline earth metal nitrates, chlorates and perchlorates, ammonium nitrate, ammonium chlorate, ammonium perchlorate and mixtures thereof preferably from the group consisting of ammonium nitrate and a mixture of ammonium nitrate and sodium or calcium nitrates, and said continuous water-immiscible organic phrase is selected from the group consisting of aliphatic, alicyclic and aromatic compounds and mixtures thereof which are in the liquid state at the formulation temperature preferably from the group consisting of fuel oil, diesel oil, distillate, kerosene, naphtha, waxes such as microcystalline wax, paraffin wax and slack wax, paraffin oils, benzene, toluene,

xylenes, polymeric oils such as the low molecular weight polymers of olefines, animal oils, fish oils, and other mineral hydrocarbon or fatty oils, and mixtures thereof and more preferably is selected from the group consisting of gasoline, kerosene, fuel oils and paraffin oils.

8. A product of a condensation reaction of an amine of Formula I

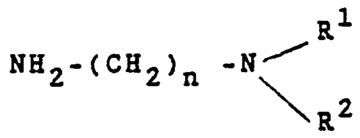 I

and a poly[alk(en)yl] succinic anhydride and/or acid wherein n is selected from the integers 1 to 3 inclusive and wherein either $R^1$ is selected from the group consisting of hydrogen, alkyl and hydroxyalkyl and $R^2$ is hydroxyalkyl; or $R^1$ and $R^2$ together form a saturated or unsaturated nitrogen-containing heterocyclic ring of 5 or 6 constituent ring members, which heterocyclic ring is optionally substituted by alkyl.

9. A product according to claim 8 characterised in that $R^2$ is selected from the group consisting of $C_1$ to $C_{20}$ hydroxyalkyl preferably $C_1$ to $C_{12}$ hydroxyalkyl and more preferably $C_1$ to $C_6$ hydroxyalkyl; $R^1$ is selected from the group consisting of alkyl, preferably $C_1$ to $C_{18}$ alkyl, more preferably $C_1$ to $C_{10}$ alkyl and most preferably $C_1$ to $C_6$ alkyl and hydroxyalkyl, preferably $C_1$ to $C_{12}$ hydroxyalkyl and more preferably $C_1$ to $C_5$ hydroxyalkyl; and n is selected from the group consisting of 1, 2 and 3, preferably 2.

10. A product according to claim 8 or claim 9 characterised in that $R^1$ and $R^2$ together form a heterocyclic ring, and that the group

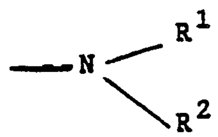

is a substituted or unsubstituted heterocyclic ring selected from the group consisting of:
1-pyrrolidinyl, 3-pyrrolin-1-yl, 1-piperazinyl, 4-methyl-1-piperazinyl and 4-morpholinyl,
or the amine of formula I has the formula shown in formula II:

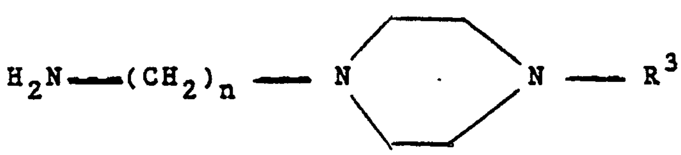 II

wherein $R^3$ is selected from hydrogen, $C_1$ to $C_4$ alkyl and $C_1$ to $C_4$-hydroxyalkyl; and n is 1, 2 or preferably 2.

European Patent Office

# EUROPEAN SEARCH REPORT

Application Number

EP 89 30 1410

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X<br><br><br><br><br><br>Y | WO-A-8 703 613 (THE LUBRIZOL CORP.)<br>* Claims 1-5,9,12,14,15,31-38,41,45,46,50,51; page 45, lines 11-14; page 41, line 29 - page 43, line 9; page 34, line 8 - page 36, line 7; page 17, lines 10-23 *<br>--- | 1-5,7<br><br><br><br><br><br>6,8-10 | C 06 B 47/14<br>B 01 F 17/16<br>C 08 F 8/32 |
| Y | US-A-3 378 494 (J.E. BERGER)<br>* Column 1, lines 33-69; column 2, line 27 - column 3, line 48; column 5, lines 42-54; claims *<br>--- | 6,8-10 | |
| P,A | WO-A-8 803 522 (THE LUBRIZOL CORP:)<br>* Claims *<br>--- | 1-10 | |
| Y | US-A-3 269 946 (H.F. WIESE)<br>* Claims; column 3, line 53; column 5, line 75 *<br>--- | 8-10 | |
| A | GB-A-2 206 574 (AECI LTD)<br>* Claims *<br>--- | 1-7 | **TECHNICAL FIELDS SEARCHED (Int. Cl.4)** |
| D,A | EP-A-0 155 800 (IMPERIAL CHEMICAL INDUSTRIES PLC)<br>* Claims *<br>--- | 1-7 | C 06 B |
| A | GB-A-2 187 182 (ICI AUSTRALIA LTD)<br>* Claims *<br>----- | 1-7 | |

The present search report has been drawn up for all claims

| Place of search | Date of completion of the search | Examiner |
|---|---|---|
| THE HAGUE | 06-06-1989 | SCHUT,R.J. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P0401)